# EUROPEAN PATENT SPECIFICATION

(11) **EP 3 382 804 B1**
(45) Date of publication and mention of the grant of the patent: **27.01.2021**
(21) Application number: 18163503.8
(22) Date of filing: 23.03.2018
(51) Int. Cl.: H01R 4/02, H01R 4/38, H01R 11/28, H01R 4/34

(54) **ELECTRICAL CONTACT ELEMENT AND METHOD OF PRODUCING A HARD-SOLDERED, ELECTRICALLY CONDUCTIVE CONNECTION TO A MATING CONTACT BY MEANS OF A PRESSED-IN SOLDERING BODY MADE FROM HARD SOLDER**
ELEKTRISCHES KONTAKTELEMENT UND VERFAHREN ZUR HERSTELLUNG EINER HARTGELÖTETEN, ELEKTRISCH LEITENDEN VERBINDUNG MIT EINEM STECKKONTAKT MITTELS EINES EINGEPRESSTEN LÖTKÖRPERS AUS HARTLOT
ÉLÉMENT DE CONTACT ÉLECTRIQUE ET PROCÉDÉ DE FABRICATION D'UNE CONNEXION ÉLECTROCONDUCTRICE SOUDÉE PAR BRASAGE FORT À UN CONTACT DE COUPLAGE AU MOYEN D'UN CORPS DE SOUDAGE ENFONCÉ FABRIQUÉ À PARTIR DE BRASURE FORTE

(30) Priority: 29.03.2017 DE 102017205360
(43) Date of publication of application: 03.10.2018
(73) Proprietor: TE Connectivity Germany GmbH, 64625 Bensheim (DE)
(72) Inventor: Blumenschein, Rudi, 73479 Ellwangen (DE); Kaehny, Frank, 64686 Lautertal (DE); Kioschis, Kai, 76829 Landau (DE); Dressel, André, 68623 Lampertheim (DE)
(74) Representative: Grünecker Patent- und Rechtsanwälte PartG mbB

(56) References cited:
- CN-U- 201 812 934
- GB-A- 778 287
- US-A- 4 802 862
- US-A- 5 052 954
- US-A1- 2010 000 982

## Description

The invention relates to an electrical connection to a contact element and a mating contact as well as a cell connector for a multicellular battery of an electric vehicle, which has such an electrical connection. Moreover, the invention relates to an electrical contact element and a method of producing a materially bonded, electrically conductive connection to a mating contact.

The electrical batteries of electric vehicles usually have a plurality of cells which in each case generate a high current and are connected in series. The cells are often also referred to as modules. The wires which contact the single cells are combined by means of cell connectors. By virtue of the high currents, the electrical wires have large cross-sections such that large forces are necessary for their connection. The electrical conductors are usually pushed against each other by means of a screw connection and a contact element which is mounted between the two conductors. In some designs, the screw in this case penetrates the electrical conductor and also the contact element.

An electrical connection with a solder provided in a recess of one contact member is known from US 4,802,862 A. From US 5,052,954 A, a solder bearing terminal pin is disclosed, wherein the pin is provided with two fingers that carry a cylindrical mass of solder that melts when the terminal pin is heated. From US 2010/000982 A1, a composite conductor is known wherein a receptacle for a mating conductor is covered with a foil made from solder in order to improve the connection. A higher contact pressure is not only necessary in order to move the electrical conductors which are typically heavy and rigid for high direct currents, but also in order to level out unevenness of the surface and to achieve an overlay which is as extensive as possible through an elastic deformation of the contact surfaces of the conductor and of the contact element which are pushed against each other. The larger the surface via which the electrical contact element and the electrical conductors, which serve as mating contacts, abut each other, the lower the transition resistance. By means of a low transition resistance, electrical losses can be reduced, and the cell connector does not heat up excessively.

Despite this proven technique, ways of reducing the transition resistance are being sought.

This object is achieved by implementing an electrical connection according to claim 1 produced by a method according to claim 8.

The abovementioned electrical connection is distinguished according to the invention in that the mating contact and contact element are hard-soldered with each other on the contact surface, the contact element being provided on the contact surface with at least one recess in which a soldering body made from the hard solder which forms the hard-solder connection of the contact surface is pressed and protrudes out of the recess over the contact surface, wherein the mating contact and contact element are pushed against each other by a screw connection. A cell connector according to the invention has such an electrical connection.

According to the abovementioned method, a reduced transition resistance can be achieved by a hard-soldered electrical connection between the mating contact and the electrical contact element, a recess being provided on a contact surface of the electrical contact element with a soldering body made from hard solder which is pressed into said recess and protrudes from the contact surface, and the contact element and mating contact being pushed against each other on the contact surface by a screw connection and the soldering body being heated and melted.

The use of hard solder ensures that the materially bonded electrical connection also withstands the highest contact pressures without damage. At the same time, the hard-solder connection results in a lower transition resistance than can be achieved by the mere application of pressure which has been practiced hitherto. By means of mounting the soldering body in the recess of the contact surface, the hard solder is located precisely where it is needed during the soldering process. This means that it does not firstly have to be drawn through the soldering gap due to the capillary action and be distributed over the contact surface, as is the case with a hard soldering from outside the contact element. The provision of the hard solder already in the recess in the contact surface enables a more even distribution of the hard solder over the contact surface. By pressing the hard solder into the recess, the overhang of the soldering body over the contact surface and thus the quantity of solder in the soldering gap can be accurately determined. The starting position of the contact element and the mating contact to each other and also the end position during the press-on process and soldering process are precisely defined by the overhang. The end position emerges from the quantity of material in the overhang of the soldering body and the size of the contact surface which is to be wetted and the contact pressure. Due to the screw connection, the hard solder connection can be additionally mechanically secured.

The contact element is preferably used for conducting high direct currents in electric vehicles, in particular for connecting battery cells. The invention can be further improved by the following developments which are independent of each other and each advantageous.

It is thus advantageous if the soldering body is a moulded part, for example a sintered part, a cast part or a part which is generated by plastic deformation, and/or is configured particularly complementary to the recess. The configuration as a moulded part and/or the complementary configuration to the recess enables a pressing-in process to be carried out precisely and close tolerances to be maintained, in particular in the overhang of the soldering body out of the contact surface.

The recess is preferably completely filled such that the soldering body is in full-surface contact with the recess without air pockets or only with negligible air pockets. The full-surface contact ensures a low transition resistance.

The contact surface or also the entire contact element is preferably configured annularly. The recess can be an annular groove and the soldering body can be an annulus. This configuration enables the use of an electrical connection in which, for example, a rivet or a screw extends through the annular body.

The contact surface, annular groove and/or soldering body can be arranged concentrically to each other. The annular groove is preferably located on an end surface of the contact element, or the contact surface forms an end surface of the contact element.

The contact element can of course also have multiple contact surfaces which are each provided with at least one recess into which a soldering body is pressed, protruding from the respective contact surface. For example, the two end surfaces of an annular contact element can be provided with a corresponding soldering body, such that a hard-soldered connection can be generated on both sides.

It is further advantageous if the contact surface has at least one protrusion which protrudes parallel to the soldering body from the contact surface. Such a protrusion can be part of a centering device, which is configured to align the electrical contact element relative to the mating contact. A receptacle can be present, for example, on the mating contact, which is configured complementary to the protrusion, with the protrusion and receptacle engaging in each other at the fully hard-soldered connection.

The at least one protrusion preferably projects beyond the soldering body. This enables a centering of the contact element and mating contact before the soldering body hits the mating contact. In this manner, when the soldering body is melted, the contact element and mating contact on the melt are prevented from flowing out of the position.

The protrusion is preferably annular, for example a circumferential collar, and can run particularly concentrically relative to at least one of the contact surface, annular groove and soldering body. It can be radially externally surrounded by the soldering body such that it forms a barrier which hinders or prevents the hard solder from flowing into a central opening. As a result, the rivet or the screw being inadvertently soldered therewith or no longer fitting through the opening can be avoided.

In the case of a fully soldered connection between the contact element and mating contact, according to one configuration, hard solder is located between the at least one protrusion and the associated complementary recess, which results in a further increase in the surface which transmits the current.

The mating contact and contact element may be pushed against each other by the screw connection in the already soldered state.

Furthermore, the recess which receives the soldering body is preferably completely filled with hard solder in the case of a fully hard-soldered connection, such that the entire surface of the recess is available for introducing the current.

Heating preferably takes place inductively, with the contact element and/or mating contact also being able to be heated.

The soldering body and/or the electrical contact element can already be provided with a flux. Nevertheless, in order to avoid corrosion to the contact surface caused by flux, it is preferable that the contact element and mating element being heated and pushed against each other is carried out in a shielding gas atmosphere. In this case, flux is not necessary.

The pushing together of the mating contact and contact element during melting of the hard solder and/or when the hard solder is being melted is preferably carried out by a screw retention of the electrical connection, which, for example, in the case of an annular contact element, extends through the annulus or through a pressing element of a soldering apparatus, which acts on the contact element and mating contact element. To generate a shielding gas atmosphere, the soldering apparatus can have a hood which encloses the contact element and the mating contact, or rather the electrical connection.

Hereinafter, the invention is explained in greater detail using an exemplary embodiment with reference to the appended figures. For the sake of simplicity, the same reference numbers are used in the individual figures for elements which correspond to one another with regard to design and/or structure. In accordance with the above statements, individual features depicted and described in the case of the exemplary embodiments can, of course, also be omitted if the technical effect linked to the respective features is unimportant in the case of a particular application. Conversely, features described above which are not depicted or described in the following exemplary embodiment can be added if the technical effect associated with this feature is not important.

In the drawings:
- Fig. 1: shows a schematic sectional view through a cell connector according to the invention;
- Fig. 2: shows a schematic sectional view of a contact element according to the invention and of a chain link in the non-hard-soldered state;
- Fig. 3: shows a hard-soldered electrical connection with a contact element according to the invention and a mating contact.

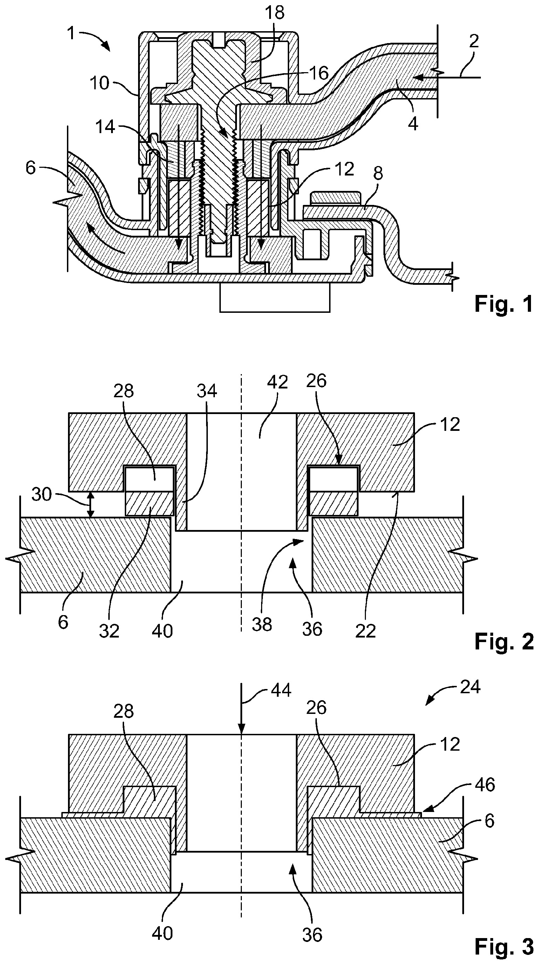

Fig. 1 shows a cell connector 1 which, in particular in multicellular vehicles, serves to electrically connect, in series, the individual cells or modules of the vehicle battery (not shown). The flow of current is schematically depicted by arrows 2. A first electrical conductor 4 is electrically connected by the cell connector 1 to a second electrical conductor 6, referred to here as the mating contact. The cell connector 1 further has an earthing connection 8 which, electrically separated from the conductors 4, 6, is electrically connected to a housing 10 of the cell connector 1. The cell connector 1 has a contact element 12, which is annular here, and optionally a further contact element 14 which is also annular for example.

The contact element 12 is located between the conductors 4, 6 and rests on the conductor 6 as a mating contact. The package made up of the conductor 4, the optional contact element 14, the contact element 12 and the mating contact 6 is pushed together via a screw connection 16, in order to obtain a full-surface overlay with a low transition resistance and a mechanically tough connection. The screw connection 16 extends through the elements 2, 12, 14 (if present) and 6. The screw connection 16 is outwardly electrically insulated through an insulating body 18 as a contact preventer.

In order to reduce the transition resistance, the contact element 12 is hard-soldered to the mating contact 6. This is explained in greater detail hereinafter by way of example with reference to Figures 2 and 3.

The contact element 12 has a contact surface 22 which is situated opposite the mating contact 6 in the completely produced electrical connection 24 (Fig. 3).

The contact element 12 is provided with at least one recess 26 into which at least one soldering body 28 made from hard solder is pressed. The recess 26 can be groove-shaped. If the contact element 12 is annular, for example, the recess 26 can thus be configured as an annular groove which is concentric in particular relative to the contact element or to an annular contact surface 22.

The soldering body 28 is preferably a moulded part, for example a sintered part, cast part or a part which is made from hard solder and which is generated by plastic deformation. The soldering body 28 should be fully pressed into the recess 26 such that it fills it as far as possible without air pockets. This can be simplified by the soldering body 28 already having cross-sectional shape, which is complementary to the cross-section of the recess 26, before being pressed into the contact element. The transition resistance between the soldering body 28 and the contact element 12 can be kept low by means of such a full-surface contact between the soldering body 28 and the recess 26 or contact element 12.

The pressed-in soldering body 28 projects beyond the contact surface 22 by an overhang 30. The quantity of the hard solder contained in the overhanging region 32 determines the quantity of hard solder which is located between the contact element 12 and the mating contact 6 when the connection 24 is fully hard-soldered. A constant quantity of hard solder can thus always be supplied through the use of soldering bodies 28 and recesses 26 having dimensions which have narrow tolerances. This is explained below with reference to Fig. 3.

The contact element 12 can have a protrusion 34 which serves to align the contact element 12 and mating contact 6. The protrusion 34 protrudes from the contact surface 22 parallel to the overhang 30 or in the direction thereof.

The protrusion 34 can be configured collar-shaped. The protrusion 34 can also run annularly and preferably also concentrically relative to the contact surface 22, in particular if the recess 26 and/or the contact surface 22 are annular. In such a case, the protrusion 35 can be surrounded by the soldering body 28.

The soldering body 28 can abut against the protrusion 34 such that the protrusion 34 forms a guide, along which the soldering body 28 is inserted and pressed into the recess 26.

The protrusion 34 is part of a centering device 36 by cooperating with a receptacle 38 which is configured complementary to the protrusion 34, in particular engaging in it. In the embodiment, this recess is a central opening 40 of the mating contact 6 which aligns with the central passage 42 of the contact element 12. The opening 40 and the passage 42 being used for the insertion of the screw connection 16 (Fig. 1).

In order to already effect an alignment of the contact element 12 and mating contact 6, before the soldering body 28 appears on the mating contact 6, the protrusion 34 projects beyond the soldering body 28. In this manner, an alignment can already take place before the soldering body 28 comes to abut against the mating contact 6.

The protrusion 34 can of course also be arranged on the mating contact 6. Other centering devices which are configured differently, for example a mutually engaging toothing and/or mutually engaging pins and receptacles, are also possible.

Before or after the relative position of the mating contact 6 and contact element 12 depicted in Fig. 2, in which the soldering body 28 rests on the mating contact 6, the soldering body 12 is preferably inductively heated. In this case, the mating contact 6 and/or the contact element 12 can be heated therewith. As soon as the soldering body begins to melt, which, due to the eddy currents, occurs firstly in the overhanging region 32, the contact body 12 and mating contact 6, under the action of a contact pressure 44, begin to move towards each other while the soldering gap 46 reduces. The melted hard solder is pushed into the soldering gap 46, where it spreads. A lateral washing-away of the mating contact 6 or contact element 12 on the hard solder melt in a direction parallel to the contact surface 22 is avoided by the centering device 36. At the same time, in the depicted embodiment, the collar-shaped protrusion 34 serves as a barrier for the hard solder, which is inhibited from entering the central opening 40 of the mating contact 6 by virtue of a locally increased flow resistance.

A flux can be part of the soldering body 28 or can have been applied onto the soldering body 28, mating contact 6 and/or contact element 12 before the soldering body 28 is melted. However, at least the melting of the soldering body 28 preferably takes place in a shielding gas atmosphere so that a flux can be dispensed with.

In the fully hard-soldered electrical connection 24, the recess 26 continues to be filled by the soldering body 28, preferably completely such that the entire surface of the recess 26 is contacted by the soldering body 28 and the lowest possible transition resistance is obtained. In order to prevent the hard solder from flowing out of the recess 28, the heating is preferably controlled depending on the distance between the mating contact 6 and the contact element 12. The hard solder is preferably only completely liquefied if the soldering gap 46 is sufficiently small to prevent the hard solder from flowing out.

In the completed electrical connection, the hard solder is also located in the centering device 36.

Since the size of the soldering gap 46 in the complete connection 24 via a number of contact elements 12 always stays the same by virtue of the constant size of the melted overhanging region 32, high manufacturing quality can be achieved. The height of the electrical connection varies only slightly.

At the beginning of the soldering process, the hard solder is already located in the soldering gap 46, and must not firstly be drawn from the outside through the capillary action into the soldering gap, which guarantees a uniform distribution of the hard solder in the soldering gap.

### Reference numbers

- 1: Cell connector
- 2: Flow of current
- 4: First electrical conductor
- 6: Second electrical conductor, mating contact
- 8: Earthing connection
- 10: Housing
- 12: Electrical contact element
- 14: Further optional contact element
- 16: Screw connection
- 18: Insulating body
- 22: Contact surface
- 24: Electrical connection
- 26: Recess
- 28: Soldering body
- 30: Overhang of the soldering body
- 32: Overhanging region
- 34: Protrusion
- 36: Centering device
- 38: Receptacle
- 40: Central opening
- 42: Central passage
- 44: Contact pressure
- 46: Soldering gap

## Claims

1. An electrical connection (24), in particular for connecting cells of a battery of an electric vehicle, with a contact element (12) and a mating contact (6), wherein the mating contact (6) and contact element (12) are hard-soldered with each other on a contact surface (22), and wherein the contact element (12) is provided on the contact surface (22) with at least one recess (26) in which a soldering body (28) made from the hard solder which forms the hard-solder connection of the contact surface (22) is pressed and protrudes out of the recess (26) over the contact surface (22), **characterized in that** the mating contact (6) comprises a central opening (40) and the J Z contact element (12) comprises a central passage (42) aligned with the central opening (40);
the electrical connection (24) further comprises a screw (16) inserted through the central opening (40) and passage (42), the mating contact (6) and the contact element (12) are pushed against each other by the screw connection (16).

2. The electrical connection (24) according to Claim 1, **characterized in that** a centering device (36) is present with at least one protrusion (34) and at least one receptacle (38), which are configured complementary to each other and engage in each other.

3. The electrical connection (24) according to Claim 2, **characterized in that** hard solder is located between the at least one protrusion (34) and the associated complementary receptacle (38).

4. The electrical connection (24) according to any of Claims 1 to 3, **characterized in that** the soldering body (28) is a moulded part.

5. The electrical connection (24) according to any of Claims 1 to 4, **characterized in that** the contact surface (22), the recess (26) and/or the soldering body (28) are annular.

6. The electrical connection (24) according to any of Claims 2 to 5, **characterized in that** the at least one protrusion (34) projects beyond the contact surface (22) parallel to the soldering body (28) from the contact surface (22).

7. A cell connector (1) for a multicellular battery of an electric vehicle with an electrical connection (24) according to any one of Claims 1 to 6.

8. A method of producing a hard-soldered electrical connection (24) between a mating contact (6) and an electrical contact element (12) which has a recess (26) in a contact surface (22), with a soldering body (28) made from hard solder, said soldering body (28) being pressed into said recess (26) and protruding from the contact surface (22), wherein the contact element (12) has a central passage (42) aligned with a central opening in the mating contact (6); a screw (16) being inserted therein; wherein the contact element (12) and the
mating contact (6) are pushed against each other on the contact surface (22) by the screw connection (16) and the soldering body (28) is heated and melted.

9. The method according to Claim 8, wherein heating is carried out inductively.

10. The method according to Claim 8 or 9, wherein heating and pushing against each other is carried out in a shielding gas atmosphere.

11. The method according to any one of Claims 8 to 10, wherein a centering takes place against the mating contact (6) and electrical contact element (12) via a centering device (36) with at least one protrusion (34) and a receptacle (38) which is complementary to the protrusion (34), and wherein the protrusion and recess engage before the soldering body (28) rests on the mating contact (6).

## Patentansprüche

1. Elektrische Verbindung (24), insbesondere zum Verbinden von Zellen einer Batterie eines Elektrofahrzeugs, mit einem Kontaktelement (12) und einem Gegenkontakt (6), wobei der Gegenkontakt (6) und das Kontaktelement (12) an einer Kontaktfläche (22) miteinander hartverlötet sind, und das Kontaktelement (12) an der Kontaktfläche (22) mit wenigstens einer Aussparung (26) versehen ist, in die ein Lötkörper (28) aus dem die Hartlötverbindung der Kontaktfläche (22) bildenden Hartlot eingepresst ist und aus der Aussparung (26) heraus über die Kontaktfläche (22) vorsteht, **dadurch gekennzeichnet, dass** der Gegenkontakt (6) eine mittige Öffnung (40) umfasst und das Kontaktelement (12) einen mit der mittigen Öffnung (40) fluchtenden mittigen Durchlass (42) umfasst;
wobei die elektrische Verbindung (24) des Weiteren eine Schraube (16) umfasst, die über die mittige Öffnung (40) und den Durchlass (42) eingeführt ist, und der Gegenkontakt (6) und das Kontaktelement (12) durch die Schraubverbindung (16) aneinander gedrückt werden.

2. Elektrische Verbindung (24) nach Anspruch 1, **dadurch gekennzeichnet, dass** eine Zentriervorrichtung (36) mit wenigstens einem Vorsprung (34) und wenigstens einer Aufnahme (38) vorhanden ist, die komplementär zueinander ausgeführt sind und miteinander in Eingriff sind.

3. Elektrische Verbindung (24) nach Anspruch 2, **dadurch gekennzeichnet, dass** sich Hartlot zwischen dem wenigstens einen Vorsprung (34) und der zugehörigen komplementären Aufnahme (38) befindet.

4. Elektrische Verbindung (24) nach einem der Ansprüche 1 bis 3, **dadurch gekennzeichnet, dass** der Lötkörper (28) ein Formteil ist.

5. Elektrische Verbindung (24) nach einem der Ansprüche 1 bis 4, **dadurch gekennzeichnet, dass** die Kontaktfläche (22), die Aussparung (26) und/oder der Lötkörper (28) ringförmig sind/ist.

6. Elektrische Verbindung (24) nach einem der Ansprüche 2 bis 5, **dadurch gekennzeichnet, dass** der wenigstens eine Vorsprung (34) parallel zu dem Lötkörper (28) von der Kontaktfläche (22) über die Kontaktfläche (22) hinaus vorsteht.

7. Zellenverbinder (1) für eine mehrzellige Batterie eines Elektrofahrzeugs mit einer elektrischen Verbindung (24) nach einem der Ansprüche 1 bis 6.

8. Verfahren zum Herstellen einer hartgelöteten elektrischen Verbindung (24) zwischen einem Gegenkontakt (6) und einem elektrischen Kontaktelement (12), das eine Aussparung (26) in einer Kontaktfläche (22) aufweist, mit einem Lötkörper (28) aus Hartlot, wobei der Lötkörper (28) in die Aussparung (26) eingepresst wird und von der Kontaktfläche (22) vorsteht, das Kontaktelement (12) einen mittigen Durchlass (42) aufweist, der mit einer mittigen Öffnung in dem Gegenkontakt (6) fluchtend ist, eine Schraube (16) darin eingeführt ist, das Kontaktelement (12) und der Gegenkontakt (6) durch die Schraubverbindung (16) an der Kontaktfläche (22) aneinandergedrückt werden und der Lötkörper (28) erhitzt und zum Schmelzen gebracht wird.

9. Verfahren nach Anspruch 8, wobei Erhitzen induktiv ausgeführt wird.

10. Verfahren nach Anspruch 8 oder 9, wobei Erhitzen und Aneinanderdrücken in einer Schutzgasatmosphäre durchgeführt werden.

11. Verfahren nach einem der Ansprüche 8 bis 10, wobei ein Zentrieren an dem Gegenkontakt (6) und dem elektrischen Kontaktelement (12) über eine Zentriervorrichtung (36) mit wenigstens einem Vorsprung (34) und einer Aufnahme (38) erfolgt, die zu dem Vorsprung (34) komplementär ist, und wobei der Vorsprung und die Aufnahme in Eingriff kommen, bevor der Lötkörper (28) an dem Gegenkontakt (6) aufliegt.

## Revendications

1. Connexion électrique (24), en particulier pour connecter les cellules d'une batterie d'un véhicule électrique, avec un élément de contact (12) et un contact d'accouplement (6), dans laquelle le contact d'accouplement (6) et l'élément de contact (12) sont soudés entre eux par brasage fort sur une surface de contact (22), et dans laquelle l'élément de contact (12) est pourvu sur la surface de contact (22) d'au moins un renfoncement (26) où un corps de brasage (28) constitué de brasure forte qui forme la connexion de brasure forte de la surface de contact (22) est enfoncé et ressort du renfoncement (26) sur la surface de contact (22),
**caractérisée en ce que**
le contact d'accouplement (6) comprend une ouverture centrale (40), et l'élément de contact (12) comprend un passage central (42) aligné avec l'ouverture centrale (40) ;
la connexion électrique (24) comprend en outre une vis (16) insérée à travers l'ouverture centrale (40) et le passage (42),
le contact d'accouplement (6) et l'élément de contact (12) sont poussés l'un contre l'autre par la connexion vissée (16).

2. Connexion électrique (24) selon la revendication 1, **caractérisée en ce qu'**un dispositif de centrage (36) est présent avec au moins une protubérance (34) et au moins un réceptacle (38), qui sont configurés de manière complémentaire et s'engagent l'un avec l'autre.

3. Connexion électrique (24) selon la revendication 2, **caractérisée en ce que** de la brasure forte est présente entre ladite au moins une protubérance (34) et le réceptacle complémentaire associé (38).

4. Connexion électrique (24) selon l'une quelconque des revendications 1 à 3, **caractérisée en ce que** le corps de brasage (28) est une pièce moulée.

5. Connexion électrique (24) selon l'une quelconque des revendications 1 à 4, **caractérisée en ce que** la surface de contact (22), le renfoncement (26) et/ou le corps de brasage (28) sont annulaires.

6. Connexion électrique (24) selon l'une quelconque des revendications 2 à 5, **caractérisée en ce que** ladite au moins une protubérance (34) se projette au-delà de la surface de contact (22) parallèlement au corps de brasage (28) depuis la surface de contact (22).

7. Connecteur de cellules (1) pour une batterie multicellulaire d'un véhicule électrique avec une connexion électrique (24) selon l'une quelconque des revendications 1 à 6.

8. Procédé de production d'une connexion électrique à brasage fort (24) entre un contact d'accouplement (6) et un élément de contact électrique (12) qui comporte un renfoncement (26) dans une surface de contact (22), avec un corps de brasage (28) constitué de brasure forte, ledit corps de brasage (28) étant poussé dans ledit renfoncement (26) et ressortant de la surface de contact (22),
dans lequel l'élément de contact (12) comporte un passage central (42) aligné avec une ouverture centrale dans le contact d'accouplement (6), où une vis (16) est insérée ;
dans lequel l'élément de contact (12) et le contact d'accouplement (6) sont poussés l'un contre l'autre sur la surface de contact (22) par la connexion vissée (16), et le corps de brasage (28) est chauffé et fondu.

9. Procédé selon la revendication 8, dans lequel le chauffage est effectué par induction.

10. Procédé selon la revendication 8 ou 9, dans lequel le chauffage et la compression réciproque sont mis en œuvre sous atmosphère gazeuse de protection.

11. Procédé selon l'une quelconque des revendications 8 à 10, dans lequel un centrage est réalisé contre le contact d'accouplement (6) et l'élément de contact électrique (12) via un dispositif de centrage (36) avec au moins une protubérance (34) et un réceptacle (38) complémentaire de la protubérance (34), et dans lequel la protubérance et le renfoncement s'engagent entre eux avant que le corps de brasage (28) ne repose sur le contact d'accouplement (6).
